# EUROPÄISCHE PATENTSCHRIFT

(11) **EP 1 487 741 B1**
(45) Veröffentlichungstag und Bekanntmachung des Hinweises auf die Patenterteilung: **23.08.2006**
(21) Anmeldenummer: 03704194.4
(22) Anmeldetag: 08.01.2003
(51) Int. Cl.: C01B 11/02, B01J 14/00

(54) **ANLAGE ZUR HERSTELLUNG EINER WÄSSRIGEN LANGZEITSTABILEN CHLORDIOXIDLÖSUNG UND IHRER DOSIERTEN INJEKTION IN EIN DURCH EINE LEITUNG FLIESSENDES MEDIUM**
SYSTEM FOR THE PRODUCTION OF AN AQUEOUS LONG-TERM STABLE CHLORINE DIOXIDE SOLUTION AND THE DOSED INJECTION THEREOF INTO A MEDIUM FLOWING THROUGH A LINE
INSTALLATION POUR PREPARER UNE SOLUTION DE DIOXYDE DE CHLORE AQUEUSE A STABILITE DANS LE TEMPS ELEVEE, ET SON INJECTION DOSEE DANS UNE SUBSTANCE EN CIRCULATION DANS UNE CONDUITE

(30) Priorität: 14.03.2002 DE 10211169
(43) Veröffentlichungstag der Anmeldung: 22.12.2004
(73) Patentinhaber: Sielaff, Kurt, 31683 Obernkirchen (DE); Löhrke, Martin, 23611 Bad Schwartau (DE)
(72) Erfinder: Sielaff, Kurt, 31683 Obernkirchen (DE); Löhrke, Martin, 23611 Bad Schwartau (DE)
(74) Vertreter: Patentanwälte Thömen & Körner
(86) Internationale Anmeldenummer: PCT/DE2003/000023
(87) Internationale Veröffentlichungsnummer: WO 2003/078312

(56) Entgegenhaltungen:
- EP-A- 0 119 686
- DE-A- 2 907 220
- US-B1- 6 284 152

## Beschreibung

Die Erfindung betrifft eine Anlage zur Herstellung einer wässrigen langzeitstabilen Chlordioxidlösung und ihrer dosierten Injektion in ein durch eine Leitung fließendes Medium.

Trotz der vergleichsweise hohen Oxidationskraft wird Chlordioxid bisher nur wenig in der Trinkwasseraufbereitung eingesetzt. Dies ist darauf zurückzuführen, dass Chlordioxid aus chemischen und physikalischen Gründen nicht lange lagerfähig ist und eine erhöhte Explosionsgefahr aufweist. Daher muss das Chlordioxid direkt am Ort der Anwendung hergestellt werden. Die Herstellung erfolgt fast ausschließlich in größeren Wasserwerken mit sehr aufwendigen und komplexen Anlagen, die von gut ausgebildeten und qualifizierten Mitarbeitern bedient werden müssen.

Ein Herstellungsverfahren für Chlordioxid ist das sogenannte Salzsäureverfahren, bei dem Salzsäure gemäß folgender Reaktionsgleichung auf Natriumchlorit einwirkt:

5 NaClO₂ + 4 HCl → 4 ClO₂ + 5 NaCl + 2 H₂O

Die dabei gebildete wässrige Chlordioxidlösung wird dem Trinkwasser als Desinfektionsmittel zugesetzt. Der Grenzwert für Chlordioxid ist in der Trinkwasserverordnung festgelegt und beträgt vor der Aufbereitung 0,4 mg/l und nach der Aufbereitung 0,2 mg/l. Der Grenzwert für Chlorit beträgt nach der Aufbereitung 0,2 mg/l.

Um diese Anforderungen an eine wässrige Chlordioxidlösung einhalten zu können, sind sehr aufwendige und komplexe Anlagen bekannt, die hohe Investitionskosten und einen hohen Wartungsaufwand erfordern. Insbesondere müssen Sicherheitsauflagen eingehalten werden, so dass bisher nur größere Wasserwerke, die einen hohen Durchsatz an aufzubereitenden Trinkwasser haben, derartige Anlagen kontinuierlich betreiben können.

Es hat sich gezeigt, dass derartige Anlagen nicht zur Desinfektion von geringen Trinkwassermengen geeignet sind. Insbesondere in Lebensmittelbetrieben, die ihr Trinkwasser einer eigenen Desinfektion unterziehen, kommt es beispielsweise in der Nacht oder am Wochenende zu Unterbrechungen, die dazu führen, dass die hergestellte Chlordioxidlösung eine längere Zeit lagert und dabei in unerwünschte Produkte zerfällt. Chlordioxid ist sehr instabil und aggressiv, und bildet beim Zerfall giftige Bestandteile.

Aus der DE 29 07 220 A1 ist eine Vorrichtung zur Erzeugung von Chlordioxid bekannt, welche eine Reaktionskammer umfasst, der über zwei Zuführleitungen Salzsäure und wässrige Alkalichloridlösung in jeweils vorgegebener Konzentration und Menge zugeführt wird. Die Vorrichtung umfasst außerdem eine Verdünnungskammer, in welche die in der Reaktionskammer hergestellte konzentrierte Chlordioxidlösung überführt wird, um dort verdünnt zu werden. Reaktionskammer und Verdünnungskammer können aus splittersicherem Glas bestehen. Eine weitere Vorrichtung zur Erzeugung von Chlordioxid ist in der US 6,284,152 B1 offenbart.

Ausgehend von diesem Stand der Technik liegt der Erfindung die Aufgabe zugrunde, eine einfache Anlage zur Herstellung einer qualitativ hochwertigen und damit langzeitstabilen Chlordioxidlösung zu schaffen, welche eine dosierte Injektion der langzeitstabilen Chlordioxidlösung in ein durch eine Leitung fließendes Medium ermöglicht, wobei die Anlage größtmögliche Sicherheit bietet.

Diese Aufgabe wird durch eine Anlage gemäß Anspruch 1 gelöst. Weiterbildungen und vorteilhafte Ausgestaltungen der Erfindung ergeben sich aus den Unteransprüchen.

Die erfindungsgemäße Anlage umfasst einen unter Atmosphärendruck stehenden Reaktorbehälter, dem über zwei Zuführleitungen Salzsäure und wässrige Alkalichloritlösung in jeweils vorgegebener Konzentration und Menge zugeführt wird. Im Reaktorbehälter reagiert die zugeführte Salzsäure mit der wässrigen Alkalichloritlösung zur einer kurzzeitstabilen Chlordioxidlösung. Die Reaktion erfolgt hierbei in Abhängigkeit von der Konzentration und Menge der zugeführten Ausgangsstoffe in wenigen Minuten.

Weiterhin ist am Reaktorbehälter eine Verdünnungsleitung angeordnet, über die dem Reaktorbehälter eine vorgegebene Menge an Wasser zugeführt werden kann. Die Wasserzufuhr erfolgt unmittelbar nach Herstellung der kurzzeitstabilen Chlordioxidlösung, wodurch die Chlordioxidlösung auf eine langzeitstabile Konzentration verdünnt wird.

Der Reaktorbehälter ist über eine Einlassleitung, die ein Sperrventil aufweist, mit einem unter Atmosphärendruck stehenden Vorlagebehälter verbunden. Der Vorlagebehälter ist derart über die Einlassleitung mit dem Reaktorbehälter verbunden, dass der Inhalt des Reaktorbehälters bei geöffnetem Sperrventil allein aufgrund seiner Schwerkraft in den Vorlagebehälter übergeht.

Am Vorlagebehälter ist weiterhin eine Injektionsleitung angeordnet, über die mittels einer Dosierpumpe die verdünnte langzeitstabile Chlordioxidlösung aus dem Vorlagebehälter in das durch die Leitung fließende Medium injiziert wird.

Erfindungsgemäß bestehen der Reaktorbehälter, der Vorlagebehälter und die Einlassleitung mit Sperrventil aus Glas.

Durch die erfindungsgemäße Anlage ist es möglich, eine qualitativ hochwertige und damit langzeitstabile Chlordioxidlösung herzustellen, die in ein durch eine Leitung fließendes Medium injiziert werden kann. Dies ist insbesondere darauf zurückzuführen, dass der Reaktorbehälter und der Vorlagebehälter aus Glas bestehen. Glas hat den Vorteil, dass es das einzige Material ist, das von Chlordioxid nicht angegriffen wird, wodurch eine Zerfallsreaktion des Chlordioxids, eine Schädigung der Behälter und eine Diffusion nach außen verhindert wird. Die Abmessungen des Reaktorbehälters und des Vorlagebehälters werden so gewählt, dass die Behälter trotz ihrer Zusammensetzung aus Glas eine Stabilität aufweisen, die die Sicherheit derartiger Anlagen gewährt. Dadurch sind der Reaktorbehälter und der Vorlagebehälter im Vergleich zum Stand der Technik relativ klein ausgebildet, so dass sich die Anlage insbesondere für Betriebe eignet, die einen vergleichsweise geringen Verbrauch an desinfizierender Chlordioxidlösung haben. Bei einem höheren Verbrauch muss der Reaktorbehälter lediglich häufiger beschickt werden. Der Vorteil der dabei gebildeten qualitativ hochwertigen Chlordioxidlösung wiegt den Nachteil der häufigen Beschickung aber bei weitem auf. Vorteilhaft ist, dass die mit der erfindungsgemäßen Anlage hergestellte qualitativ hochwertige Chlordioxidlösung auch nach längeren Standzeiten, beispielsweise nach einem Wochenende, unter Einhaltung der in der Trinkwasserverordnung festgelegten Grenzwerte verwendet werden kann.

Weiterhin können auch die Einlassleitung und das Sperrventil aus Glas bestehen. Dies hat den Vorteil, dass von der Herstellung im Reaktorbehälter bis zum Übergang in die Injektionsleitung die Chlordioxidlösung mit keinem anderen Werkstoff als Glas in Berührung kommt.

Eine Weiterbildung der Erfindung sieht vor, dass ein unter Atmosphärendruck stehender Absorptionsbehälter derart mit dem Reaktorbehälter und dem Vorlagebehälter verbunden ist, dass Gase, die im Reaktor- oder Vorlagebehälter entstehen, in den Absorptionsbehälter übergehen und dort gebunden werden. Dadurch wird erreicht, dass gesundheitsgefährdende Gase nicht an die Umgebung abgegeben werden und eine Gefahr für den Menschen darstellen.

In einer vorteilhaften Ausgestaltung der Erfindung besteht auch der Absorptionsbehälter aus Glas. Dadurch wird verhindert, dass dieser von Chlordioxid angegriffen wird und dabei giftige Gase entstehen. Als Absorptionsmittel für die entstehenden giftigen Gase hat sich Natriumthiosulfat bewährt.

Vorzugsweise ist eine Dosierpumpe vorgesehen, welche die vorgegebene Salzsäuremenge in den Reaktorbehälter pumpt, und eine weitere Dosierpumpe, welche die vorgegebene Menge an Alkalichloritlösung in den Reaktorbehälter pumpt.

Eine Weiterbildung der Erfindung besteht darin, dass im Reaktorbehälter ein erster und ein zweiter Schwellwertschalter angeordnet sind, die die Zufuhr von Salzsäure und Alkalichloritlösung in den Reaktorbehälter steuern. Durch die Schwellwertschalter wird erreicht, dass beim Erreichen eines bestimmten Flüssigkeitspegels innerhalb des Reaktorbehälters die Zufuhr des gerade zugeführten Stoffes abgeschaltet wird. Dies dient der Sicherheit der Anlage. Auf diese Weise wird verhindert, dass sich bei einer Fehlfunktion der Zufuhr der Ausgangsstoffe eine explosive Konzentration an Chlordioxid innerhalb des Reaktors bilden kann.

Zusätzlich kann die Zufuhr von Salzsäure und Alkalichloritlösung in den Reaktorbehälter durch eine Zeitsteuerung begrenzbar sein. Dies stellt eine zusätzliche Sicherheit gegen Fehlfunktionen, wie Störung oder Ausfall der Schwellwertschalter dar.

Außerdem ist vorzugsweise ein dritter Schwellwertschalter im Reaktorbehälter angeordnet ist, der die Zufuhr von Wasser in den Reaktorbehälter steuert. Auch hierdurch wird erreicht, dass beim Erreichen eines bestimmten Flüssigkeitspegels innerhalb des Reaktorbehälters die Zufuhr des Wassers abgeschaltet wird. Dadurch lässt sich einerseits eine vorgegebene Menge an Wasser zuführen. Andererseits wird bei einer Fehlfunktion der Wasserzufuhr ein Überlaufen des Reaktorbehälters verhindert.

Auch hier kann zusätzlich die Zufuhr von Wasser in den Reaktorbehälter durch eine Zeitsteuerung begrenzbar sein.

Eine vorteilhafte Ausgestaltung der Erfindung sieht vor, dass die mit der Injektionsleitung verbundene Dosierpumpe derart über eine Einrichtung steuerbar ist, dass eine zur Durchflussmenge des Mediums proportionale Menge an langzeitstabiler Chlordioxidlösung in die Leitung injiziert wird. Dadurch wird eine gleichmäßige Desinfektion des durch die Leitung fließenden Mediums erreicht.

Vorzugsweise ist die zugeführte Salzsäure eine 9 %ige Lösung und die zugeführte Alkalichloritlösung eine 7,5 %ige Lösung. Aus derart konzentrierten Lösungen lässt sich in wenigen Minuten eine geeignete Chlordioxidlösung herstellen. Nach Verdünnung hat die im Vorlagebehälter enthaltene langzeitstabile Chlordioxidlösung dann vorzugsweise eine Konzentration von etwa 2 g/l.

In einer Weiterbildung der Erfindung sind die Dosierpumpen für Salzsäure und Alkalichloritlösung als Schlauchpumpen ausgebildet, bei denen ein flexibler Schlauch von Mitnehmerklauen eines Rotors abwechselnd zusammengedrückt und expandiert wird. Die Mengendosierung erfolgt entsprechend der Drehzahl des Rotors. Bei weniger als einer Umdrehung kann die Mengendosierung auch in Abhängigkeit der Winkelverstellung des Rotors erfolgen.

Weiterhin ist eine gemeinsame Einrichtung zur Steuerung der Dosierpumpen vorgesehen.

Eine vorteilhafte Ausgestaltung der Erfindung sieht vor, dass ein erster Vorratsbehälter für Salzsäure und ein zweiter Vorratsbehälter für Alkalichloritlösung vorgesehen sind, wobei der Füllstand der Vorratsbehälter kontrollierbar ist. Ist ein Vorratsbehälter leer, wird der Reaktorbehälter nicht mehr bestückt. Bei einem leeren Vorratsbehälter ist vorzugsweise noch derart viel Salzsäure oder Alkalichloritlösung im Schlauchsystem vorhanden, dass die Menge für eine Beschickung des Reaktorbehälters ausreicht. Es wird so verhindert, dass bei einem leeren Vorratsbehälter keine Chlordioxidlösung mit entsprechenden Mengenanteilen hergestellt werden kann. Dies könnte sonst das Mischungsverhältnis im Reaktorbehälter durcheinander bringen, so dass der Reaktorbehälter und der Vorlagebehälter vollständig entleert werden müssten, um wieder reproduzierbare Verhältnisse zu erhalten.

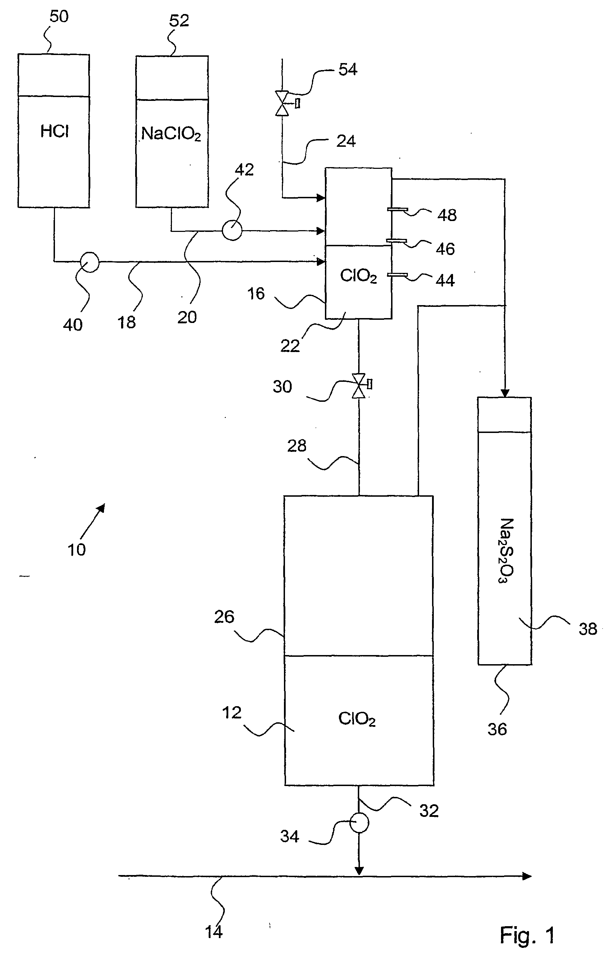

Nachfolgend wird die Erfindung anhand eines Ausführungsbeispiels erläutert, das in der Zeichnung dargestellt ist. In dieser zeigt
- Fig. 1: eine schematischen Ansicht der erfindungsgemäßen Anlage.

In Fig. 1 ist die erfindungsgemäße Anlage 10 zur Herstellung der wässrigen langzeitstabilen Chlordioxidlösung 12 und ihrer dosierten Injektion in ein durch eine Leitung 14 fließendes Medium dargestellt.

Dargestellt ist ein aus Glas bestehender Reaktorbehälter 16, der über eine erste Zuführleitung 18 mit einem eine 9 %ige Salzsäure enthaltenen Vorratsbehälter 50 verbunden ist. Weiterhin ist der Reaktorbehälter 16 über eine zweite Zuführleitung 20 mit einem Vorratsbehälter 52 verbunden, der eine 7,5 %ige wässrige Natriumchloritlösung enthält.

Zur Herstellung der Chlordioxidlösung 22 wird eine vorgegebene Menge an Salzsäure mittels einer Dosierpumpe 40 in den Reaktorbehälter 16 gepumpt. Die Steuerung der Dosierpumpe 40 erfolgt über eine hier nicht dargestellte Steuerungseinrichtung. Zur Sicherheit ist im Reaktorbehälter 16 außerdem ein Schwellwertschalter 44 angeordnet, der die Dosierpumpe 40 bei Erreichen eines vorgegebenen Flüssigkeitspegels abschaltet und eine weitere Dosierpumpe 42 einschaltet. Die Dosierpumpe 42 pumpt eine vorgegebene Menge an Natriumchloritlösung in den Reaktorbehälter 16. Dies geschieht wiederum über eine hier nicht dargestellte Steuereinrichtung. Zur Sicherheit ist im Reaktorbehälter 16 außerdem ein Schwellwertschalter 46 angeordnet, der die Dosierpumpe 42 bei Erreichen eines vorgegebenen Flüssigkeitspegels abschaltet. Die maximale Durchflussmenge von Salzsäure, Natriumchloritlösung und Wasser wird bei Störung oder Ausfall der Dosierung und der Schwellwertschalter 44, 46, 48 zusätzlich durch eine Zeitsteuerung begrenzt.

In dem aus Glas bestehenden Reaktorbehälter 16 reagiert die zugeführte Salzsäure mit der zugeführten Natriumchloritlösung in wenigen Minuten zur einer Chlordioxidlösung 22. Da der Reaktorbehälter 16 aus Glas besteht, wird er hierbei nicht von der gebildeten Chlordioxidlösung 22 angegriffen, so dass weniger giftige Gase entstehen und kein Chlordioxid nach außen diffundiert. Trotzdem ist die Chlordioxidlösung 22 nur kurzzeitig stabil. Um eine langzeitstabile Chlordioxidlösung zu erhalten, wird die kurzzeitstabile Chlordioxidlösung 22 verdünnt, vorzugsweise auf eine Konzentration von 2 g/l. Dazu ist eine Verdünnungsleitung 24 vorgesehen, über die dem Reaktorbehälter 16 eine vorgegebene Menge an Wasser zugeführt wird. Dies geschieht wiederum über eine hier nicht dargestellte Steuereinrichtung. Zur Sicherheit ist im Reaktorbehälter 16 außerdem ein Schwellwertschalter 48 angeordnet, der bei Erreichen eines vorgegebenen Flüssigkeitspegels ein Sperrventil 54 der Verdünnungsleitung 24 schließt.

Die hergestellte langzeitstabile Chlordioxidlösung wird daraufhin in einen aus Glas bestehenden Vorlagebehälter 26 überführt, der unterhalb der Reaktorbehälters 16 angeordnet ist. Dies geschieht über eine Einlassleitung 28 mit Sperrventil 30, die jeweils auch aus Glas bestehen. Dabei läuft die im Reaktorbehälter 16 befindliche Chlordioxidlösung bei geöffnetem Sperrventil 30 aufgrund ihrer eigenen Schwerkraft in den Vorlagebehälter 26.

Dadurch, dass Reaktorbehälter 16, Vorlagebehälter 26, Einlassleitung 28 und Sperrventil 30 aus Glas gefertigt sind, wird verhindert, dass die Geräte 16, 26, 28, 30 durch das Chlordioxid angegriffenen werden und dieses dabei in giftige Bestandteile zerfällt. Außerdem diffundiert kein Chlordioxid nach außen. Somit wird eine qualitativ hochwertige und damit langzeitstabile Chlordioxidlösung 12 erhalten. Die Fertigung aus Glas führt auch dazu, dass der Reaktorbehälter 16 und der Vorlagebehälter 26 in ihren Abmessungen kleiner ausgebildet sind als beim Stand der Technik. Dadurch lassen sich die Sicherheitsanforderungen sowohl für den Reaktorbehälter 16 als auch für den Vorlagebehälter 26 erfüllen.

Der Reaktorbehälter 16 und der Vorlagebehälter 26 sind mit einem unter Atmosphärendruck stehenden Absorptionsbehälter 36 verbunden, der ebenfalls aus Glas besteht und als Absorptionsmittel 38 Natriumthiosulfat enthält. Giftige Gase, die im Reaktorbehälter 16 oder im Vorlagebehälter 26 entstehen, können im Absorptionsbehälter 36 gebunden werden und gelangen somit nicht unkontrolliert in die Umgebung.

Die langzeitstabile Chlordioxidlösung 12 wird mittels einer Dosierpumpe 34 über eine Injektionsleitung 32 aus dem Vorlagebehälter 26 in das durch die Leitung 14 fließende Medium injiziert. Die Dosierpumpe 34 ist dabei derart über eine hier nicht dargestellte Einrichtung steuerbar, dass eine zur Durchflussmenge des Mediums proportionale Menge an langzeitstabiler Chlordioxidlösung 12 in die Leitung 14 injiziert wird.

### Bezugszeichenliste

### (ist Bestandteil der Beschreibung)

- 10: Anlage
- 12: langzeitstabile Chlordioxidlösung
- 14: Leitung für fließendes Medium
- 16: Reaktorbehälter
- 18: Zuführleitung für Salzsäure
- 20: Zuführleitung für Alkalichloritlösung
- 22: kurzzeitstabile Chlordioxidlösung
- 24: Verdünnungsleitung
- 26: Vorlagebehälter
- 28: Einlassleitung
- 30: Sperrventil
- 32: Injektionsleitung
- 34: Dosierpumpe
- 36: Absorptionsbehälter
- 38: Absorptionsmittel
- 40: Dosierpumpe
- 42: Dosierpumpe
- 44: Schwellwertschalter
- 46: Schwellwertschalter
- 48: Schwellwertschalter
- 50: Vorratsbehälter
- 52: Vorratsbehälter
- 54: Sperrventil

## Patentansprüche

1. Anlage (10) zur Herstellung einer wässrigen langzeitstabilen Chlordioxidlösung (12) und ihrer dosierten Injektion in ein durch eine Leitung (14) fließendes Medium, umfassend
a) einen unter Atmosphärendruck stehenden Reaktorbehälter (16), dem über zwei Zuführleitungen (18, 20) Salzsäure und wässrige Alkalichloritlösung in jeweils vorgegebener Konzentration und Menge zugeführt wird, wodurch eine kurzzeitstabile Chlordioxidlösung (22) im Reaktorbehälter (16) entsteht,
b) eine Verdünnungsleitung (24), über die dem Reaktorbehälter (16) Wasser in vorgegebener Menge zugeführt wird, wodurch eine langzeitstabile Chlordioxidlösung (12) entsteht,
c) einen unter Atmosphärendruck stehenden Vorlagebehälter (26), der über eine Einlassleitung (28) mit Sperrventil (30) derart mit dem Reaktorbehälter (16) verbunden ist, dass der Inhalt (22) des Reaktorbehälters (16) bei geöffnetem Sperrventil (30) aufgrund seiner Schwerkraft in den Vorlagebehälter (26) übergeht,
d) eine Injektionsleitung (32), über die mittels einer Dosierpumpe (34) die verdünnte langzeitstabile Chlordioxidlösung (12) aus dem Vorlagebehälter (26) in das durch die Leitung (14) fließende Medium injiziert wird,
wobei der Reaktorbehälter (16), der Vorlagebehälter (26) und die Einlassleitung (32) mit Sperrventil (34) aus Glas bestehen.

2. Anlage (10) nach Anspruch 1, **dadurch gekennzeichnet, dass** auch die Einlassleitung (32) und das Sperrventil (34) aus Glas bestehen.

3. Anlage (10) nach Anspruch 1 oder 2, **dadurch gekennzeichnet, dass** ein unter Atmosphärendruck stehender Absorptionsbehälter (36) derart mit dem Reaktorbehälter (16) und dem Vorlagebehälter (26) verbunden ist, dass Gase, die im Reaktor- oder Vorlagebehälter (16, 26) entstehen, in den Absorptionsbehälter (36) übergehen und dort gebunden werden.

4. Anlage (10) nach Anspruch 3, **dadurch gekennzeichnet, dass** der Absorptionsbehälter (36) aus Glas besteht und als Absorptionsmittel (38) Natriumthiosulfat enthält.

5. Anlage (10) nach einem der Ansprüche 1 bis 4, **dadurch gekennzeichnet, dass** eine Dosierpumpe (40) vorgesehen ist, welche die vorgegebene Salzsäuremenge in den Reaktorbehälter (16) pumpt, und dass eine weitere Dosierpumpe (42) vorgesehen ist, welche die vorgegebene Menge an Alkalichloritlösung in den Reaktorbehälter (16) pumpt.

6. Anlage (10) nach einem der Ansprüche 1 bis 5, **dadurch gekennzeichnet, dass** im Reaktorbehälter (16) ein erster und ein zweiter Schwellwertschalter (44, 46) angeordnet ist, der die Zufuhr von Salzsäure und Alkalichloritlösung in den Reaktorbehälter (16) steuert.

7. Anlage (10) nach Anspruch 6, **dadurch gekennzeichnet, dass** die Zufuhr von Salzsäure und Alkalichloritlösung in den Reaktorbehälter (16) durch eine Zeitsteuerung begrenzbar ist.

8. Anlage (10) nach einem der Ansprüche 1 bis 7, **dadurch gekennzeichnet, dass** im Reaktorbehälter (16) ein dritter Schwellwertschalter (48) angeordnet ist, der die Zufuhr von Wasser in den Reaktionsbehälter (16) steuert.

9. Anlage (10) nach Anspruch 8, **dadurch gekennzeichnet, dass** die Zufuhr von Wasser in den Reaktorbehälter (16) durch eine Zeitsteuerung begrenzbar ist.

10. Anlage (10) nach einem der Ansprüche 1 bis 9, **dadurch gekennzeichnet, dass** die mit der Injektionsleitung (32) verbundene Dosierpumpe (34) derart über eine Einrichtung steuerbar ist, dass eine zur Durchflussmenge des Mediums proportionale Menge an langzeitstabiler Chlordioxidlösung (12) in die Leitung (14) injiziert wird.

11. Anlage (10) nach einem der Ansprüche 1 bis 10, **dadurch gekennzeichnet, dass** die Salzsäure eine 9 %ige Lösung und die Alkalichloritlösung eine 7,5 %ige Lösung ist.

12. Anlage (10) nach einem der Ansprüche 1 bis 11, **dadurch gekennzeichnet, dass** die im Vorlagebehälter (26) enthaltene langzeitstabile Chlordioxidlösung (12) eine Konzentration von etwa 2 g/l hat.

13. Anlage (10) nach einem der Ansprüche 1 bis 11, **dadurch gekennzeichnet, dass** die Dosierpumpen (40, 42) für Salzsäure und Alkalichloritlösung als Schlauchpumpen ausgebildet sind, bei denen ein flexibler Schlauch von Mitnehmerklauen eines Rotors abwechselnd zusammengedrückt und expandiert wird, wobei die Mengendosierung entsprechend der Drehzahl des Rotors oder bei weniger als einer Umdrehung des Rotors in Abhängigkeit der Winkelverstellung des Rotors erfolgt.

14. Anlage (10) nach einem der Ansprüche 1 bis 13, **dadurch gekennzeichnet, dass** eine Einrichtung zur Steuerung der Dosierpumpen (34, 40, 42) vorgesehen ist.

15. Anlage nach einem der Ansprüche 1 bis 14, **dadurch gekennzeichnet, dass** ein erster Vorratsbehälter (50) für Salzsäure und ein zweiter Vorratsbehälter (52) für Alkalichloritlösung vorgesehen sind, wobei der Füllstand der Vorratsbehälter kontrollierbar ist.

16. Anlage (10) nach Anspruch 15, **dadurch gekennzeichnet, dass** bei einem leeren Vorratsbehälter (50, 52) noch derart viel Salzsäure oder Alkalichloritlösung im Schlauchsystem vorhanden ist, dass die Menge für eine einzige Mischung zur Herstellung von Chlordioxidlösung ausreicht.

## Claims

1. System (10) for the production of an aqueous long-term stable chlorine dioxide solution (12) and the dosed injection thereof into a medium flowing through a line (14), said system comprising
a) a reactor container (16) which is at atmospheric pressure and which is supplied with a respectively predefined concentration and amount of hydrochloric acid and an aqueous alkali chlorite solution via two feed lines (18, 20), whereby a short-term stable chlorine dioxide solution (22) is obtained in the reactor container (16),
b) a dilution line (24) which is used to supply the reactor container (16) with a predefined amount of water, whereby a long-term stable chlorine dioxide solution (12) is obtained,
c) a receiving container (26) which is at atmospheric pressure and which is connected to the reactor container (16) by means of an inlet line (28) with a stop valve (30) in such a way that the contents (22) of the reactor container (16) are transferred into the receiving container (26) by means of gravity when the stop valve (30) is open,
d) an injection line (32) which is used to inject the diluted long-term stable chlorine dioxide solution (12) via a dosing pump (34) from the receiving container (26) into the medium flowing through the line (14),
wherein the reactor container (16), the receiving container (26) and the inlet line (32) with a stop valve (34) are made of glass.

2. System (10) according to Claim 1, **characterised in that** the inlet line (32) and the stop valve (34) are also made of glass.

3. System (10) according to Claim 1 or 2, **characterised in that** an absorption container (36) which is at atmospheric pressure is connected to the reactor container (16) and to the receiving container (26) in such a way that gases which are produced in the reactor container or receiving container (16, 26) are transferred to the absorption container (36) and are bound there.

4. System (10) according to Claim 3, **characterised in that** the absorption container (36) is made of glass and contains sodium thiosulphate as absorption agent (38).

5. System (10) according to any of Claims 1 to 4, **characterised in that** a dosing pump (40) is provided which pumps the predefined amount of hydrochloric acid into the reactor container (16), and **in that** a further dosing pump (42) is provided which pumps the predefined amount of alkali chlorite solution into the reactor container (16).

6. System (10) according to any of Claims 1 to 5, **characterised in that** a first and a second threshold value switch (44, 46) is arranged in the reactor container (16), said switches controlling the supply of hydrochloric acid and alkali chlorite solution to the reactor container (16).

7. System (10) according to Claim 6, **characterised in that** the supply of hydrochloric acid and alkali chlorite solution to the reactor container (16) can be limited by a time control system.

8. System (10) according to any of Claims 1 to 7, **characterised in that** a third threshold value switch (48) is arranged in the reactor container (16), said switch controlling the supply of water to the reactor container (16).

9. System (10) according to Claim 8, **characterised in that** the supply of water to the reactor container (16) can be limited by a time control system.

10. System (10) according to any of Claims 1 to 9, **characterised in that** the dosing pump (34) which is connected to the injection line (32) can be controlled via a device in such a way that an amount of long-term stable chlorine dioxide solution (12) which is proportional to the amount of medium that has flowed through is injected into the line (14).

11. System (10) according to any of Claims 1 to 10, **characterised in that** the hydrochloric acid is a 9% solution and the alkali chlorite solution is a 7.5% solution.

12. System (10) according to any of Claims 1 to 11, **characterised in that** the long-term stable chlorine dioxide solution (12) contained in the receiving container (26) has a concentration of approximately 2 g/l.

13. System (10) according to any of Claims 1 to 11, **characterised in that** the dosing pumps (40, 42) for hydrochloric acid and alkali chlorite solution are designed as hose pumps, in which a flexible hose is alternately compressed and expanded by engaging claws of a rotor, wherein the dosage of the amount takes place in a manner depending on the rotational speed of the rotor or, in the event of less than one revolution of the rotor, as a function of the angular movement of the rotor.

14. System (10) according to any of Claims 1 to 13, **characterised in that** a device is provided for controlling the dosing pumps (34, 40, 42).

15. System according to any of Claims 1 to 14, **characterised in that** a first supply container (50) for hydrochloric acid and a second supply container (52) for alkali chlorite solution are provided, wherein the filling level of the supply containers can be monitored.

16. System (10) according to Claim 15, **characterised in that**, when a supply container (50, 52) is empty, there is still enough hydrochloric acid or alkali chlorite solution in the hose system for a single mixing operation for the production of chlorine dioxide solution.

## Revendications

1. Installation (10) de production d'une solution aqueuse stable à long terme de dioxyde de chlore (12) et son injection dosée dans un milieu s'écoulant à travers un conduit, comprenant
a) Un réservoir à réaction (16) se trouvant sous pression atmosphérique, dans lequel sont introduits de l'acide chlorhydrique et une solution aqueuse de chlorite d'alcali en quantité et concentration respectivement prédéterminées, ce qui a pour effet de produire une solution stable à court terme de dioxyde de chlore (22) dans le réservoir à réaction (16),
b) un conduit de dilution (24), via lequel une quantité d'eau prédéterminée est amenée au réservoir à réaction (16), ce qui a pour effet de produire une solution stable à long terme de dioxyde de chlore (12),
c) un réservoir récepteur (26) se trouvant sous pression atmosphérique, qui est relié au réservoir à réaction (16) par l'intermédiaire d'un conduit d'admission (18) avec un clapet anti-retour (30) de manière à ce que le contenu (22) du réservoir à réaction (16) passe, à clapet anti-retour (30) ouvert, en raison de sa pesanteur, dans le réservoir récepteur (26).
d) Un conduit d'injection (32), via lequel la solution stable à long terme et diluée de dioxyde de chlore (12), est injectée, au moyen d'une pompe de dosage (34), depuis le réservoir récepteur (26), dans le milieu s'écoulant à travers le conduit (14), le réservoir à réaction (16), le réservoir récepteur (26) et le conduit d'admission (32) avec le clapet anti-retour (34) étant en verre.

2. Installation (10) suivant la revendication 1, **caractérisée en ce que** le conduit d'admission (32) et le clapet anti-retour (34) sont également en verre.

3. Installation (10) suivant la revendication 1 ou 2, **caractérisée en ce qu'**un réservoir d'absorption (36) se trouvant sous pression atmosphérique est relié au réservoir à réaction (16) et au réservoir récepteur (26), de manière à ce que des gaz formés dans le réservoir à réaction ou dans le réservoir récepteur (16, 26) passent dans le réservoir d'absorption (36), où ils sont liés.

4. Installation (10) suivant la revendication 3, **caractérisée en ce que** le réservoir d'absorption (36) est en verre et contient du thiosulfate de sodium comme agent d'absorption (38).

5. Installation (10) suivant une des revendications 1 à 4, **caractérisée en ce qu'**une pompe de dosage (40), qui pompe la quantité prédéterminée d'acide chlorhydrique dans le réservoir à réaction (16) est prévue et qu'une autre pompe de dosage (42) est prévue, qui pompe la quantité prédéterminée de solution de chlorite d'alcali dans le réservoir à réaction (16).

6. Installation (10) suivant une des revendications 1 à 5, **caractérisée en ce que** dans le réservoir à réaction (16) sont disposés un premier et un second commutateur de valeur seuil (44, 46) qui commandent l'arrivée d'acide chlorhydrique et de solution de chlorite d'alcali dans le réservoir à réaction (16).

7. Installation (10) suivant la revendication 6, **caractérisée en ce que** l'arrivée d'acide chlorhydrique et de solution de chlorite d'alcali dans le réservoir à réaction (16) peut être limitée par une commande temporisée.

8. Installation (10) suivant une des revendications 1 à 7, **caractérisée en ce que** dans le réservoir à réaction (16) est disposé un troisième commutateur de valeur seuil (48) qui commande l'arrivée d'eau dans la cuve de réacteur (16).

9. Installation (10) suivant la revendication 8, **caractérisée en ce que** l'arrivée d'eau dans le réservoir à réaction (16) peut être limitée par une commande temporisée.

10. Installation (10) suivant une des revendications 1 à 9, **caractérisée en ce que** la pompe de dosage (34) reliée au conduit d'injection (32) peut être commandée par un dispositif de manière à injecter dans le conduit (14) une quantité de solution stable à long terme de dioxyde de chlore (12) qui est proportionnelle au débit du milieu.

11. Installation (10) suivant une des revendications 1 à 10, **caractérisée en ce que** l'acide chlorhydrique est une solution à 9% et la solution de chlorite d'alcali est une solution à 7,5%.

12. Installation (10) suivant une des revendications 1 à 11, **caractérisée en ce que** la solution stable à long terme de dioxyde de chlore (12) présente une concentration de 2g/l environ.

13. Installation (10) suivant une des revendications 1 à 11, **caractérisée en ce que** les pompes de dosage (40, 42) pour l'acide chlorhydrique et pour la solution de chlorite d'alcali sont conçues comme pompes tubulaires, dont un tuyau flexible est alternativement comprimé et détendu par des griffes d'entraînement d'un rotor, le dosage de la quantité ayant lieu en fonction du nombre de tours du rotor ou, dans l'hypothèse de moins d'un tour du rotor, en fonction du décalage angulaire du rotor.

14. Installation (10) suivant une des revendications 1 à 13, **caractérisée en ce qu'**un dispositif de commande des pompes de dosage (34, 40, 42) est prévu.

15. lnstallation (10) suivant une des revendications 1 à 14, **caractérisée en ce qu'**un premier réservoir de stockage (50) pour l'acide chlorhydrique et un second réservoir de stockage (52) pour la solution de chlorite d'alcali sont prévus, le niveau des réservoirs de stockage étant contrôlable.

16. Installation (10) suivant la revendication 15, **caractérisée en ce que**, le réservoir de stockage (50, 52) vide, il demeure dans le système de tuyauterie une quantité d'acide chlorhydrique ou de solution de chlorite d'alcali suffisante pour un seul mélange servant à la production de solution de dioxyde de chlore.
